# FASCICULE DE BREVET EUROPEEN

(11) **EP 2 242 357 B1**
(45) Date de publication et mention de la délivrance du brevet: **13.04.2016**
(21) Numéro de dépôt: 09718389.1
(22) Date de dépôt: 03.02.2009
(51) Int. Cl.: C08J 9/00, A01N 59/16, C08F 20/28, C08F 2/46

(54) **NOUVEAU MATERIAU A PROPRIETES BACTERIOSTATIQUES**
NEUARTIGES MATERIAL MIT BAKTERIOSTATISCHEN EIGENSCHAFTEN
NOVEL MATERIAL WITH BACTERIOSTATIC PROPERTIES

(30) Priorité: 04.02.2008 FR 0800570
(43) Date de publication de la demande: 27.10.2010
(73) Titulaire: Centre National de la Recherche Scientifique, 75016 Paris (FR); Université d'Orléans, 45067 Orléans Cedex 2 (FR)
(72) Inventeur: BENOIT, Roland, F-45100 Orleans (FR); SABOUNGI, Marie-Louise, F-45000 Orleans (FR); BRULÉ, Fabienne, F-45560 Saint Denis En Val (FR)
(74) Mandataire: Gevers & Orès
(86) Numéro de dépôt international: PCT/FR2009/000120
(87) Numéro de publication internationale: WO 2009/109724

(56) Documents cités:
- EP-A- 1 754 494
- WO-A-2005/014074
- WO-A-2006/026026
- KACAREVIC-POPOVIC ET AL: "Radiolytic synthesis of Ag-poly(BIS-co-HEMA-co-IA) nanocomposites" RADIATION PHYSICS AND CHEMISTRY, ELSEVIER SCIENCE PUBLISHERS BV., AMSTERDAM, NL, vol. 76, no. 8-9, 24 mai 2007 (2007-05-24), pages 1333-1336, XP022094645 ISSN: 0969-806X

## Description

L'invention a pour objet de nouveaux matériaux antimicrobiens et un procédé pour leur fabrication.

De façon plus précise l'invention concerne un matériau antibactérien comprenant une matrice polymérique poreuse dans laquelle sont réparties de façon sensiblement homogène des nanoparticules d'un métal antibactérien.

Ce matériau est biocompatible et permet un relargage régulier et prolongé dans le temps de nanoparticules de métal et d'éléments sous forme ionique, plus particulièrement d'argent, dotées de propriétés antibactériennes.

Un tel matériau possède de nombreuses applications dans le domaine médical et paramédical, industriel et domestique. En outre il peut être produit facilement et de façon reproductible par un procédé simple dans sa mise en oeuvre, facilement industrialisable et économique.

Les infections nosocomiales sont reconnues comme un problème majeur de santé publique de par leur fréquence, leur coût, leur gravité. En France, on estime entre 500 000 et 800 000 le nombre de patients qui contractent chaque année une infection nosocomiale. Ce risque d'infection est en moyenne de 8% mais peut atteindre 30% dans un service tel que la réanimation. Les antibiotiques montrent aujourd'hui leurs limites dans le traitement de ces infections *(*S. V. Kyriacou, et al., Biochemistry, 43, (2004),140*),* aussi est-il nécessaire de limiter la contamination des patients en diminuant la prolifération de ces bactéries.

L'argent est un élément naturellement bactériostatique et fongicide qui ne développe pas de phénomène(s) d'accoutumance.

Ses propriétés, connues depuis l'antiquité (Ravelin, J. 1869. Chemistry of vegetation. Sci. Nat. 11:93-102), reposent sur l'inhibition de la reproduction de cellules de bactéries, de virus et/ou de champignons. Son efficacité est liée à sa capacité à être disponible sous forme d'ions Ag⁺ *(*A.D. Russell, et al., Prog Med Chem, 31 (1994), 352 *;* Q. L. Feng, et al., Journal of Biomedical Materials Research, 52, Issue 4, (2000) 662*).* C'est pourquoi il trouve de multiples applications sous forme de sels.

On peut citer par exemple les lentilles de contact *(*F. Christopher, et al. , Contact Lens & Anterior Eye 29 (2006) 247*)* ou les pansements. Cependant, le milieu biologique complexe une partie des ions d'argent et diminue de ce fait leur efficacité. Par ailleurs, l'utilisation de sels d'argent plus concentrés augmente les risques de toxicité *(*Douglas Brandt BS et al., Journal of the American Academy of Dermatology, 53, Issue 2, , (2005) S105*).*

Afin d'augmenter la durée d'action, sans augmenter la concentration en ions, l'argent peut être préparé sous forme de couches minces. Dans ce cas, l'argent sous forme ionique est libéré par l'oxydation de la surface du dépôt.

Le procédé de fabrication consiste à recouvrir ou implanter un matériau avec de l'argent *(*G. Goshegera et al., Biomaterials 25 (2004) 5547*)* par des dépôts sous vide. Ces procédés sont complexes, consommateurs d'énergie et donc coûteux. De plus, ces matériaux font l'objet de problèmes récurrents d'adhésion ou de relargage aux interfaces. Enfin, ils présentent l'inconvénient d'offrir une faible surface développée par rapport à la quantité d'argent utilisée *(*Jin Wang et al., Surface & Coatings Technology 201 (2007) 6893*).* L'efficacité de ces matériaux reste par conséquent réduite *(*E. P. J. M Everaert,. et al., Journal of Materials Science - Materials in Medicine 9 (1998). 147*)*

De façon plus récente, il a été proposé d'utiliser l'argent sous forme de nanoparticules, ces dernières étant d'une toxicité bien plus faible que les sels *(*V. Alta et al., Biomaterials 25 (2004), 4383*;* I. Sondi et al., Journal of Colloid and Interface Science, 275 (2004), 177*).*

Sous forme de nanoparticules *(*R. Strohala et al., Journal of Hospital Infection (2005) 60, 226), l'argent présente une grande surface réactive qui permet d'optimiser la libération des ions Ag⁺ pour une très faible quantité de matière.

Récemment, Jose Ruben Morones et al. (Nanotechnology 16 (2005) 2346) ont montré que les nanoparticules, dans certaines conditions, présentaient des modes d'action complémentaires de ceux des ions Ag⁺. Lorsque leur taille est comprise entre 1 et 10 nm, les nanoparticules se fixent à la surface des cellules ou pénètrent celles-ci en détruisant leur capacité de reproduction.

Les nanoparticules représentent donc la forme la plus efficace de l'argent en tant qu'élément bactériostatique et fongicide. Cette forme est d'ailleurs utilisée dans de nombreuses applications (WO 2006/026026 ; US-2006182813 ; US-2007218555).

Cependant, plus la taille des nanoparticules est réduite, plus elles sont sensibles à l'oxydation. Elaborées sous vide, leur oxydation est immédiate lorsqu'elles sont exposées à l'air. En solution, il est impératif d'utiliser des tensio-actifs *(*F. Furno et al. Journal of Antimicrobial Chemotherapy (2004) 54, 1019*)* qui permettent à la fois de contrôler leurs tailles et de les protéger de l'oxydation. Cependant, pour des tailles inférieures à 10 nm, cette protection devient peu efficace et ne permet pas de conserver ces nanoparticules sur de longues périodes. Outre cet inconvénient de stabilisation, la synthèse chimique en solution aqueuse comporte de nombreuses étapes et génère des produits chimiques qui doivent être retraités.

D'autres procédés brevetés proposent d'incorporer par mélange ces nanoparticules d'argent dans un matériau hôte (EP-1825841). Le matériau hôte offre effectivement une possibilité de protéger les nanoparticules de l'oxydation mais cette méthode augmente les coûts de production et les problèmes techniques, notamment dus à la dispersion inhomogène des nanoparticules dans le matériau. Enfin, il est parfois nécessaire, dans la mesure du possible, d'effectuer un traitement de surface afin de rendre ces composites biocompatibles.

Plusieurs procédés décrivant la synthèse de nanoparticules d'argent et leur inclusion dans une matrice polymérique sont connus (US-2007/0218555, US-2006/0182813, WO 2006/026026, WO 2004/002384, EP-1 825 841).

Yun-Ok Kang et al. (Journal of Non-Cristalline Solids, 352, Issue 5, (2006) 463*)* décrivent un matériau préparé en deux étapes : des nanoparticules sont enrobées par un polymère puis le mélange est incorporé dans un second polymère obtenu à partir de l'aniline, substance cancérigène. Les nanoparticules enrobées d'une enveloppe en polymère sont difficiles à préparer, le matériau est toxique, fragile et difficile à conserver. Le procédé est complexe et le produit obtenu comprend des agglomérats de nanoparticules réparties de façon non homogène dans la matrice solide.

F. Furno et al. (Journal of Antimicrobial Chemotherapy, 54 (2004) 1019*)* décrivent un procédé long et complexe d'imprégnation d'un polymère par des nanoparticules d'argent. Le produit obtenu perd ses propriétés bactériostatiques après un lavage.

Hyeon Suk Shin et al. (Journal of Colloid and interface Science, 274 (2004) 89) décrivent des nanoparticules d'argent stabilisées par un enrobage en polyvinyl pyrrolidone.

V. Alt et al. (Biomaterials, 25 (2004) 4383) décrivent un ciment osseux à base de polyméthyl méthacrylate dans lequel sont dispersées des nanoparticules d'argent. Le ciment est mélangé aux nanoparticules avant l'étape de prise puis il est moulé et solidifié.

A.M.B. Silva et al. (Journal of Physicq and Chemistry of Solids 68 (2007) 729) décrit un procédé dans lequel des sels d'argent sont introduits dans une résine, la résine est ensuite réticulée, découpée et les nanoparticules d'argent sont formées *in situ* par irradiation UV. Outre la complexité du procédé, celui-ci ne donne accès qu'à des objets de faible épaisseur.

Le document WO 2005/014074 décrit des lentilles dotées de propriétés antimicrobiennes en un matériau polymère dans lequel sont réparties des nanoparticules d'argent de façon uniforme. Les polymères sont à base de monomères porteurs de fonctions siloxane. S'ils sont appréciés dans le domaine de l'ophtalmologie, toutefois ces monomères ne sont pas dépourvus d'inconvénients : le conseil de l'Europe par sa résolution ResAP (2004)5, émet des réserves sur les contacts entre les siloxanes et les aliments, le Canada émet des réserves sur l'utilisation de certains siloxanes et sur les risques qu'ils présentent pour la santé humaine. De plus, sous forme polymérisée, le polysiloxane présente une perméabilité à l'oxygène 12 fois supérieure à celle du pHEMA (poly hydroxyéthyl méthacrylate). Pour être efficace, un matériau bactériostatique contenant des nanoparticules d'argent doit avoir une taille contrôlée, de préférence inférieure à 10 nm. A cette échelle, les nanoparticules s'oxydent rapidement. Le pHEMA permet, par rapport au siloxane et au polysiloxane, un meilleur contrôle de cette oxydation. Enfin, les auteurs de WO 2005/014074 ont constaté que, dans les mêmes conditions que celles employées pour la production de nanoparticules d'argent dans du polysiloxane, dans l'hydroxyéthyl méthacrylate, il ne se formait pas de nanoparticules d'argent. La synthèse de ces nanoparticules en même temps que celle d'un polymère est délicate et requiert des conditions maîtrisées notamment en termes de milieu réactionnel et d'irradiation.

Les matériaux bactériostatiques actuels sont donc peu efficaces malgré des concentrations en sel d'argent importantes. Ils génèrent des déchets chimiques et/ou ont un coût de production élevé du fait des nombreuses étapes de synthèses chimiques et de mise en forme.

Le poly hydroxyéthyl méthacrylate est particulièrement intéressant pour toutes les applications médicales et paramédicales en raison de son excellente biocompatibilité *(*M. H. Casimiro et al., Nuclear Instruments and Methods in Physics Research B 236 (2005) 482*).*

Toutefois, jusqu'à très récemment on ne savait l'associer avec l'argent qu'en employant ce dernier sous forme de sel.

Le document Kacarevic-Popovic et al., Radiation Physics and Chemistry, 76 (2007), 1333-1336, décrit des nanocomposites d'agent et de poly (BIS-co-HEMA-co-IA).

Ces matériaux sont préparés par un procédé en trois étapes :
- préparation d'un hydrogel de poly HEMA ou de copolymère, par radiolyse gamma d'une solution de monomères
- absorption de sels d'argent AgNO₃ dans l'hydrogel à partir d'une solution aqueuse de sels,
- transformation des sels d'argent en nanoparticules d'argent par irradiation gamma.

Dans ce procédé, la taille des nanoparticules n'est pas contrôlée et l'on obtient une composition de particules polydisperse, ce qui a pour conséquence une faible efficacité du produit. En outre, le produit obtenu par le procédé de l'art antérieur est très hétérogène.

Par conséquent, il subsistait le besoin d'un procédé permettant de préparer de façon simple, reproductible et économique un matériau biocompatible, dans lequel un métal antibactérien, tel que l'argent, serait dispersé de façon sensiblement homogène sous forme de nanoparticules ayant une répartition de taille sensiblement monodisperse.

Un premier objet de l'invention est un procédé de fabrication d'un matériau composite comprenant une matrice polymérique poreuse dans laquelle sont dispersées des nanoparticules d'un métal antibactérien tel que l'argent.

Ce procédé comporte :
(a) le mélange de deux compositions :
   (i) une première composition comprenant un fluide polymérisable-comprenant du HEMA ou 2-hydroxyéthylméthacrylate, et
   (ii) une seconde composition comprenant des sels d'argent ;
(b) l'irradiation du mélange de l'étape (a) par un rayonnement de longueur d'onde capable de provoquer la polymérisation du fluide polymérisable et la formation de nanoparticules d'argent.

Selon l'invention, le fluide polymérisable comprenant du HEMA comprend un mélange de monomères et/ou de pré-polymères susceptibles de copolymériser par action d'un rayonnement de longueur d'onde appropriée.

Le HEMA est présent dans le fluide polymérisable sous forme de monomère.

D'autres monomères et/ou pré-polymères peuvent être présents dans le fluide polymérisable.

De façon avantageuse, le ou les co-monomères présents dans le fluide polymérisable sont choisis parmi : l'acrylamide, le méthacrylamide, les dialkyl acrylamides en C₁C₈, les dialkyl méthacrylamides en C₁C₈, les allylacrylamides en C₁-C₈, les allyméthacrylamides en C₁C₈, les hydroxyalkylacrylamides en C₁C₈, les hydroxyalkylméthacrylamides en C₁-C₈, les N-vinyl lactames, les biopolymères comme le chitosan par exemple.

Parmi les monomères qui peuvent être présents conjointement avec le HEMA dans le fluide polymérisable, on peut mentionner les monomères hydrophiles, et plus particulièrement le N,N-diméthylacrylamide (DMA), l'hydroxy éthyl acrylate, l'hydroxy propylacrylate, l'hydroxy propyl méthacrylate, le diméthylamino éthyl méthacrylate (DMAEMA), le diméthylaminoéthylméthacrylamide, l'acrylamide, le méthacrylamide, l'acide acrylique, l'acide méthacrylique et le N,N-diméthylacrylamide

De façon avantageuse, le monomère de HEMA ou le copolymère de HEMA représente plus de 50% en masse de la masse totale des monomères et prépolymères de la composition fluide polymérisable, de préférence plus de 80%, encore plus préférentiellement plus de 90% et encore plus avantageusement plus de 99%.

Avantageusement le HEMA est présent dans la composition fluide polymérisable sous forme de monomère.

Outre les monomères et/ou les copolymères, la composition fluide polymérisable peut comprendre d'autres constituants tels que des charges (minéraux ou polymères) et des solvants.

De façon avantageuse, l'ajout des substances suivantes permet, lorsque cela est souhaité, d'obtenir une distribution monodisperse de la taille des nanoparticules d'argent: le polyméthyl-méthacrylate (pMMA), le polyvinylpyrrolidone, l'acide polyacrylique et le polyacrylamide. Ces substances sont avantageusement ajoutées à une concentration molaire comprise entre 10⁻⁶ et 10⁻³ M dans le mélange de monomères et de sels d'argent avant irradiation (le mélange de l'étape (a)).

Un polymère est un matériau formé par la polymérisation et/ou la réticulation de plusieurs monomères ou pré-polymères.

Un pré-polymère est un polymère qui peut être encore polymérisé ou réticulé pour former un polymère de plus haut poids moléculaire que le polymère de départ.

La composition comprenant des sels d'argent qui est utilisée dans le procédé de l'invention est de préférence, une solution aqueuse de sels d'argent. Les sels d'argent peuvent être par exemple Ag₂SO₄ ou AgNO₃. De préférence, on choisit Ag₂O₄.

Au mélange de la composition fluide polymérisable et de la composition comprenant des sels d'argent, on ajoute un ou plusieurs solvants : avantageusement de l'eau déionisée (de préférence de conductivité inférieure à 18 Mégohms) et au moins un alcool. De préférence on utilise un mélange d'un alcool primaire, tel que l'éthanol et le méthanol, et d'un alcool secondaire tel que l'isopropanol. Avantageusement, on utilise un mélange de méthanol et d'isopropanol.

Le mélange de l'étape (a) comprend de préférence :
- 55 à 70 % en volume de monomère ou de pré-polymère,
- 30 à 45 % en volume de solvants,
- 10⁻¹ à 10⁻⁵ pourcent en masse de sels d'argent,

De façon avantageuse, le solvant comprend de 5 à 50% d'un ou plusieurs alcools (méthanol, éthanol, isopropanol) et de 95 à 50% d'eau.

Les valeurs préférées sont
- 58 à 63 % et avantageusement environ 60 % en volume de monomère ou de pré-polymère,
- 5 à 10 % et avantageusement environ 7 % en volume de méthanol
- 1 à 5 % et avantageusement environ 3 % en volume d'isopropanol
- 15 à 25 % et avantageusement environ 20 % en volume d'eau déionisée (18 Mégohms),

Les composants du mélange sont mélangés et placés sous vide d'oxygène avant traitement par irradiation.

Cette étape peut consister en un balayage de la solution par un flux d'Argon, ou en une mise sous vide du mélange (à une pression de l'ordre du mbar).

Le mélange de l'étape (a) est ensuite traité par un rayonnement de longueur d'onde appropriée pour provoquer à la fois la polymérisation du fluide polymérisable et la formation de nanoparticules d'argent. De façon préférentielle, c'est un traitement par un rayonnement de longueur d'onde comprise entre 4.10⁻⁷ et 10⁻¹² mètre. Avantageusement, le rayonnement est un rayonnement gamma de quelques picomètres, de 0,5 à 2.10⁻¹² mètre, encore mieux de 0,8 à 1,2.10⁻¹² mètre et encore préférentiellement de 0,9 à 1,1.10⁻¹² mètre.

L'application de ce traitement au mélange de l'étape (a) provoque la polymérisation du mélange polymérisable et la formation de nanoparticules d'argent de façon simultanée, de telle sorte qu'une matrice de polymère se forme, dans laquelle est présente une distribution sensiblement uniforme de nanoparticules d'argent.

Contrairement aux procédés de l'art antérieur, la formation du polymère et des nanoparticules d'argent est simultanée, ce qui représente un gain substantiel en termes d'économie de procédé. Ce procédé favorise l'homogénéité du matériau obtenu, la stabilisation des nanoparticules sans qu'il soit besoin de recourir à des méthodes de stabilisation telles que celles décrites dans l'art antérieur.

Le contrôle de l'irradiation permet de contrôler la taille des nanoparticules et la cinétique de polymérisation. Avantageusement, la dose est comprise entre 1 et 30 kGray et le débit de dose est supérieur ou égal à 2 kGray/heure. L'augmentation de la dose contribue à renforcer la dureté du matériau. L'augmentation du débit de dose multiplie le nombre de nanoparticules, réduit leur taille, diminue le temps d'exposition et augmente l'efficacité bactériostatique du matériau.

Lorsqu'un débit de dose inférieur à 2 kGray/heure est utilisé, l'efficacité bactériostatique du matériau composite est réduite et repose essentiellement sur la libération d'ions argent, car la taille des nanoparticules est majoritairement supérieure à 10 nanomètres. Pour une dose supérieure à 0,5 kGray le composite obtenu est un matériau solide dont la teinte jaune varie en fonction de la concentration initiale en sels d'argent.

De façon avantageuse, le mélange de l'étape (a) est introduit avant irradiation dans un moule de la forme adaptée à l'usage ultérieur du matériau. L'irradiation conduit à un matériau de la forme et de la dureté choisie, dans lequel sont réparties des nanoparticules d'argent. Ce matériau est bactériostatique et fongicide et ces propriétés peuvent être constatées sur de longues périodes de temps.

Un autre objet de l'invention est un matériau composite dont un procédé de préparation a été décrit ci-dessus et comportant :
(i) une matrice polymérique poreuse, à base de monomères dont au moins 50% en poids sont du HEMA,
(ii) des nanoparticules d'argent réparties dans la matrice polymérique.

De façon avantageuse, les nanoparticules d'argent ont une taille comprise entre 1 et 10 nm, avantageusement entre 3 et 7 nm.

De préférence, les nanoparticules d'argent dans le matériau de l'invention ont une répartition de taille monodisperse. Par répartition de taille monodisperse on entend un rapport d/dₘₐₓ inférieur à 10%, d étant le diamètre de l'une quelconque des nanoparticules et dₘₐₓ le diamètre de la plus grande nanoparticule.

Les nanoparticules d'argent sont des particules composées essentiellement d'argent (Ag) ayant une taille inférieure au micron. Les nanoparticules d'argent contiennent de l'argent de degré d'oxydation Ag° et, de façon facultative, Ag¹⁺ et/ou Ag²⁺. La formation des nanoparticules d'argent peut être observée par spectrométrie UV au moyen d'un pic caractéristique localisé dans la gamme de longueur d'onde comprise entre 340 et 460 nm. Pour des clusters de quelques atomes, on peut aussi observer un pic d'absorption compris entre 630 et 690 nm

La matrice polymérique comporte des pores d'une taille comprise entre 1 nanomètre et 5 microns, de préférence entre 20 nm et 1µm, avantageusement entre 25 nm et 0,1µm. La nature du mélange des monomères ainsi que le débit l'irradiation (dose et débit de dose) permettent de contrôler la porosité de la matrice.

Les propriétés de la matrice polymérique sont contrôlées par l'intensité et la durée de l'irradiation. La coloration jaune du matériau composite bactériostatique provient de l'absorption plasmon des nanoparticules d'argent. Cette absorption a été mise en évidence par spectroscopie UV-Visible. Lorsque la taille des nanoparticules est inférieure à 1 nm, par exemple du fait d'un débit de dose supérieur à 2 kGray / heure, la coloration du matériau composite bactériostatique est à dominante rose. Cette coloration provient aussi d'un phénomène d'absorption dû aux plasmons de surface.

Pour un même débit de dose, la durée de l'irradiation augmente le taux de polymérisation et/ou de réticulation du polymère et donc la dureté du matériau.

La quantité d'argent dans le matériau final est de préférence comprise entre 10⁻² et 10⁻⁵ % en masse par rapport à la masse totale du matériau.

Après irradiation, le matériau reste stable à l'air pendant plusieurs mois. Pour une conservation prolongée, il est préférable de le stocker à l'abri de l'humidité et de la lumière.

Le matériau de l'invention peut être utilisé directement au sortir du moule, ou bien il peut être broyé pour former une poudre. La granulométrie de la poudre est contrôlée par la dureté du matériau de l'invention et les conditions de broyage.

En fonction de l'application visée, le matériau est soumis à une irradiation qui lui donne une dureté élevée (prothèse, instrument de chirurgie) ou au contraire il est soumis à une irradiation moins importante de façon à posséder une certaine souplesse (ciment chirurgical, pansement, lentille).

Le matériau de l'invention peut être utilisé dans de nombreuses applications, dans le domaine médical, cosmétique, domestique, industriel.

Dans le domaine médical, il peut servir à la fabrication de prothèses ou en qualité de ciment pour la mise en place de prothèses, il peut être utilisé pour fabriquer des instruments de chirurgie. On peut l'utiliser pour produire des lentilles, notamment des lentilles pansement post-chirurgicales, on peut également l'utiliser dans la fabrication de pansements à appliquer sur la peau et également pour fabriquer des implants pour la diffusion d'argent ionique.

Le matériau de l'invention peut être utilisé pour fabriquer des équipements destinés au bâtiment, à l'usage des particuliers ou des collectivités :

Des surfaces antibactériennes peuvent être obtenues par l'application d'un revêtement de surface (peinture) comprenant une poudre d'un matériau de l'invention. Des interrupteurs électriques peuvent être moulés en un matériau de l'invention. On peut mouler les parois internes de réfrigérateurs en un matériau de l'invention. On peut également s'en servir pour produire des réservoirs d'eau potable.

Dans le domaine du mobilier également ce matériau présente de nombreuses applications : plateaux destinés à recevoir des instruments de chirurgie, tables à langer, meubles de salle de bain ou de cuisine, mobilier destiné à l'équipement de collectivités telles que crèches, hôpitaux, maisons de retraite, écoles.

Le matériau de l'invention sous forme de poudre peut être utilisé comme conservateur dans des compositions cosmétiques ou des compositions de peinture. Il peut également entrer dans la constitution de flacons dans lesquels peuvent être stockées de telles compositions.

Les propriétés bactériostatiques et fongicides prolongées du matériau de l'invention, associées à sa bonne biocompatibilité permettent dans toutes ces applications une réduction de la prolifération microbienne et une meilleure sécurité sanitaire.

Les matériaux de l'invention peuvent non seulement être utilisés pour éliminer ou réduire les microorganismes susceptibles de créer des problèmes sanitaires, mais aussi pour leurs propriétés bactériostatiques vis-à-vis de bactéries qui sont la cause d'odeurs nauséabondes.

A cet effet, les matériaux de l'invention ont une utilité dans la fabrication de vêtements, d'équipements sportifs, de semelles de chaussures, dans les sanitaires et équipements de cuisines.

Pour certaines applications, notamment la production de lentilles pansements, la préparation du matériau de l'invention est faite préférentiellement au moment de son utilisation. Aussi un autre objet de l'invention est une composition telle que celle dont un procédé de préparation a été décrit ci-dessus, en deux parties pour la préparation extemporanée d'un matériau de l'invention et comprenant au moins :
(i) une première composition comprenant un fluide polymérisable comprenant du HEMA ou 2-hydroxyéthylméthacrylate, et
(ii) une seconde composition comprenant des sels d'argent, chacune de ces compositions présentant les caractéristiques décrites ci dessus.

Le mélange extemporané des deux compositions, suivi de l'introduction dans un moule et de l'irradiation gamma donne accès à un article en matériau antimicrobien et stérile directement utilisable.

### EXEMPLE

**Figure 1** **:** Spectre différentiel d'absorption entre un matériau composite et une référence
**Figure 2** **:** Image obtenue par microscopie électronique en transmission d'un matériau composite bactériostatique contenant 2. 10⁻⁴ M de sel d'argent Ag₂SO₄.
**Figure 3** **:** Essais d'un matériau bactériostatique à base de 2.10⁻⁴ M de sel Ag₂SO₄ sur quatre bactéries : *Escherichia coli, Pseudomonas aeruginosa, Staphylococcus aureus, Streptococcus faecalis.*

On prépare une solution comprenant :
5 ml Ag₂SO₄ 10⁻³ M, 29,85 ml d'HEMA, 3,73 ml de méthanol, 1,49 ml d'isopropanol et 9,93 ml d'eau ultra pure à 18 Mégohms. Les produits sont mélangés dans un bêcher et le mélange final est dégazé pendant 10 minutes à l'argon afin de retirer l'oxygène gazeux. Cette opération, dans le cadre d'une application industrielle, peut-être remplacée, si nécessaire, par un pompage primaire jusqu'à 1 mbar pendant 1 minute. La solution est ensuite irradiée sous rayons gamma avec une dose de 2 kGray.

On obtient un matériau bactériostatique avec un pourcentage massique final en argent de 3,1.10⁻³%.

La même opération est répétée avec une concentration en argent de 0 M, 6.10⁻⁵ M, 2.10⁻⁴ M.

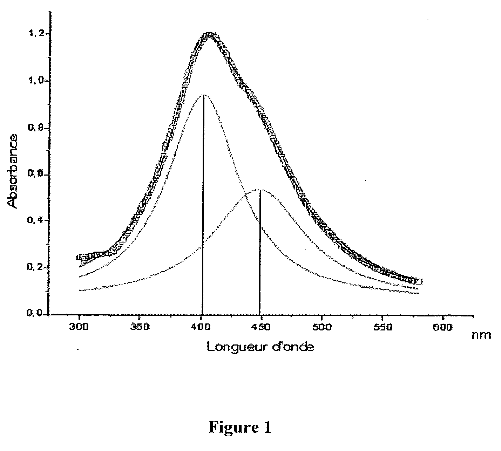

La figure 1 montre un spectre d'absorption obtenu par différence entre un matériau composite bactériostatique contenant un pourcentage massique de 3,1.10⁻³% d'argent, sous forme de nanoparticules, et une référence identique sans nanoparticules d'argent.

Les deux bandes d'absorption à 400 et 450 nm sont caractéristiques des nanoparticules d'argent.

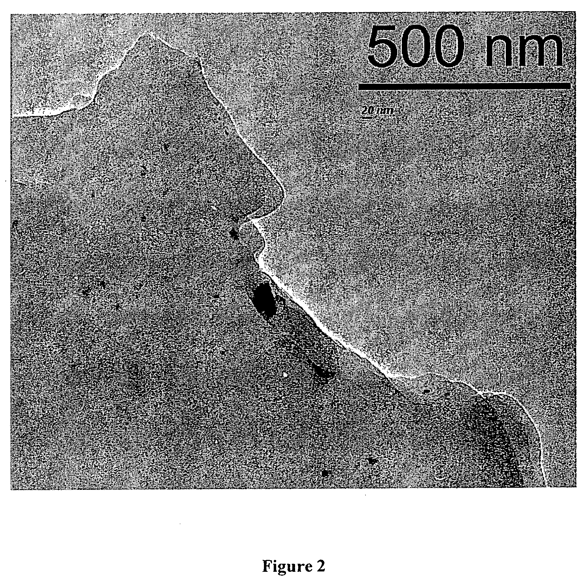

Les caractérisations par microscopie électronique en transmission ont permis de vérifier que la taille des nanoparticules était inférieure à 10 nm (Figure 2).

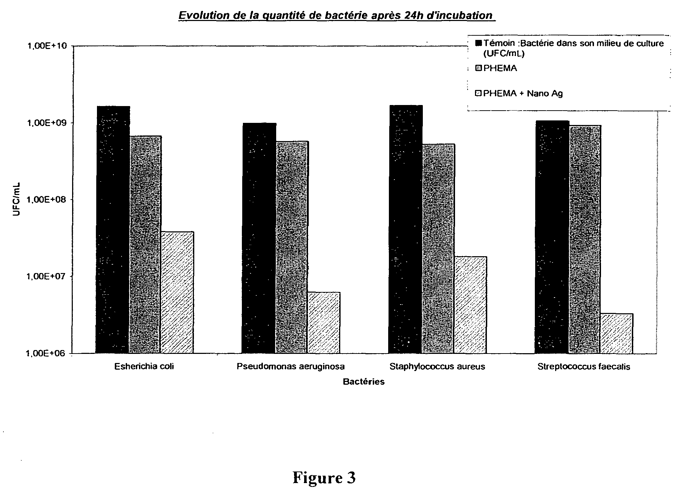

L'efficacité du matériau composite bactériostatique à base de Ag₂SO₄ a été testée sur quatre bactéries : *Escherichia coli, Pseudomonas aeruginosa, Staphylococcus aureus, Streptococcus faecalis.* La figure 3 présente l'évolution comparative des quatre bactéries après 24 heures d'exposition au matériau.

Pour une bactérie donnée, une préculture est réalisée en conditions stériles dans un tube de 15 mL avec 2 mL de milieu de culture adéquat (voir tableau), inoculée avec 50 µL d'une culture bactérienne à saturation, et mise à incuber 12h à 37°C sous agitation. Cent microlitre(s) de cette préculture sont utilisés pour inoculer 20 mL de milieu (identique à celui utilisé pour la préculture) (ensemensement au 1/200°). Deux millilitres de cette culture sont répartis dans chaque tube à essais ou témoins, les tubes à essais contiennent 2 mL de gel + le matériau préparé ci-dessus avec une concentration finale en argent de 2.10⁻⁴ M (NanoAg sur la figure 3), et les tubes témoins contiennent 2 mL de gel, les tubes sont placés 12h à 37°C sous agitation. Après incubation, une mesure de turbidimétrie est réalisée pour chaque culture à l'aide d'un spectrophotomètre, à une longueur d'onde de 600nm.

| **Bactérie** | **Milieu de culture** |
|---|---|
| *Escherichia coli* | LB |
| *Staphylococcus aureus* | LB |
| *Pseudomonas aeruginosa* | LB |
| *Streptococcus faecalis* | coeur-cervelle |

### Composition des milieux de culture

LB pour 1L : 10 g de tryptone, 10 g d'extrait de levure, 5 g de chlorure de sodium, ajusté à pH 7,4, autoclavé 15 min à 121 °C.

Coeur-cervelle : pour 1L, 10 g de protéase-peptone, 12,5 g d'infusion de cervelle de veau, 5 g d'infusion de cervelle de boeuf, 2 g de glucose, 5 g de chlorure de sodium, 2,5 g d'hydrogénophosphate de sodium, ajusté à pH 7,4, autoclavé 15 min à 121°C.

Ces tests montrent que 90% à 99% des bactéries sont détruites en 24 heures.

Par comparaison, Ivan Sondi et al. (Journal of Colloid and Interface Science 275, 2004, 177-182) ont dû utiliser une solution à base de nanoparticules d'argent 1000 fois plus concentrée (20µg/cm³) afin d'obtenir un résultat similaire sur la bactérie *Escherichia coli.*

## Revendications

1. Procédé de fabrication d'un matériau composite comprenant une matrice polymérique poreuse dans laquelle sont dispersées des nanoparticules d'argent, ce procédé comportant les étapes suivantes :
(a) le mélange de deux compositions :
(i) une première composition comprenant un fluide polymérisable comprenant du HEMA ou 2-hydroxyethylméthacrylate présent dans ledit fluide sous la forme de monomère, et
(ii) une seconde composition comprenant des sels d'argent ;
Ledit mélange comprenant en outre des solvants choisis parmi de l'eau et au moins un alcool ;
(b) l'irradiation du mélange de l'étape (a) par un rayonnement de longueur d'onde capable de provoquer la polymérisation du fluide polymérisable et la formation de nanoparticules d'argent de façon simultanée.

2. Procédé selon la revendication 1, dans lequel le HEMA représente plus de 50% en masse de la masse totale des monomères et prépolymères de la composition fluide polymérisable.

3. Procédé selon l'une quelconque des revendications précédentes dans lequel la composition comprenant des sels d'argent est une solution aqueuse de sels d'argent.

4. Procédé selon l'une quelconque des revendications précédentes dans lequel le mélange de l'étape (a) comprend :
- 55 à 70 % en volume de monomère ou de pré-polymère,
- 30 à 45 % en volume de solvants.
- 10⁻¹ à 10⁻⁵ pourcent en masse de sels d'argent

5. Procédé selon la revendication 3 ou la revendication 4 dans lequel le solvant comprend de 5 à 50% d'un ou plusieurs alcools et de 95 à 50% d'eau.

6. Procédé selon l'une quelconque des revendications précédentes dans lequel le mélange de l'étape (a) comprend en outre entre 10⁻⁶ et 10⁻³ M d'au moins une substance choisie parmi : le polyméthyl-méthacrylate (pMMA), le polyvinylpyrrolidone, l'acide polyacrylique et le polyacrylamide.

7. Procédé selon l'une quelconque des revendications précédentes dans lequel les composants du mélange sont placés sous vide d'oxygène avant irradiation.

8. Procédé selon l'une quelconque des revendications précédentes dans lequel le mélange de l'étape (a) est traité par un rayonnement de longueur d'onde comprise entre 4.10⁻⁷ et 10⁻¹² mètre.

9. Procédé selon l'une quelconque des revendications précédentes dans lequel le débit de dose du traitement par rayonnement est supérieur ou égal à 2 kGray/heure.

10. Procédé selon l'une quelconque des revendications précédentes dans lequel la dose d'irradiation est comprise entre 1 et 30 kGray.

11. Procédé selon l'une quelconque des revendications précédentes dans lequel le mélange de l'étape (a) est introduit dans un moule avant irradiation.

12. Matériau composite susceptible d'être obtenu par le procédé selon l'une quelconque des revendications 1 à 11, comportant :
(i) une matrice polymérique poreuse à base de monomères dont au moins 50% en poids sont du HEMA.
(ii) des nanoparticules d'argent ayant une répartition de taille monodisperse réparties dans la matrice polymérique.

13. Matériau selon la revendication 12, dans lequel la quantité d'argent est comprise entre 10⁻² et 10⁻⁵ % en masse par rapport à la masse totale du matériau.

14. Utilisation d'un matériau selon l'une quelconque des revendications 12 ou 13 comme matériau antimicrobien.

15. Utilisation d'un matériau selon l'une quelconque des revendications 12 ou 13 pour la fabrication la fabrication de prothèses, ou en qualité de ciment pour la mise en place de prothèses, pour fabriquer des instruments de chirurgie, pour produire des lentilles, dans la fabrication de pansements, pour fabriquer : des équipements destinés au bâtiment, des surfaces antibactériennes, des interrupteurs électriques, des parois internes de réfrigérateurs, des réservoirs d'eau potable, des flacons, des plateaux destinés à recevoir des instruments de chirurgie, des tables à langer, des meubles de salle de bain ou de cuisine, du mobilier destiné à l'équipement de collectivités, des vêtements, des équipements sportifs, des semelles de chaussures, des équipements sanitaires.

16. Utilisation d'un matériau selon l'une quelconque des revendications 12 ou 13 comme conservateur dans des compositions cosmétiques ou des compositions de peinture.

## Patentansprüche

1. Verfahren zur Herstellung eines Verbundmaterials, das eine poröse Polymermatrix umfasst, in der Silber-Nanopartikel dispergiert sind, wobei dieses Verfahren die folgenden Schritte umfasst:
(a) das Mischen von zwei Verbindungen:
(i) einer ersten Verbindung, die ein polymerisierbares Fluid umfasst, das HEMA oder 2-Hydroxyethylmethacrylat umfasst, das in dem Fluid in Monomerform vorhanden ist, und
(ii) einer zweiten Verbindung, die Silbersalze umfasst;
wobei die Mischung ferner Lösungsmittel umfasst, die unter Wasser und mindestens einem Alkohol ausgewählt sind;
(b) die Bestrahlung der Mischung aus Schritt (a) durch eine Strahlung mit einer Wellenlänge, die in der Lage ist, die Polymerisation des polymerisierbaren Fluides und die Bildung von Silbernanopartikeln auf simultane Art und Weise zu bewirken.

2. Verfahren nach Anspruch 1, wobei das HEMA über 50 Ma% der Gesamtmasse der Monomere und Vorpolymere der polymerisierbaren Fluidverbindung darstellt.

3. Verfahren nach einem der vorhergehenden Ansprüche, wobei die Verbindung, die Silbersalze umfasst, eine wässrige Lösung von Silbersalzen ist.

4. Verfahren nach einem der vorhergehenden Ansprüche, wobei die Mischung aus Schritt (a) Folgendes umfasst:
- 55 bis 70 Vol.-% Monomer oder Vorpolymer,
- 30 bis 45 Vol.-% Lösungsmittel,
- 10⁻¹ bis 10⁻⁵ Ma% Silbersalze.

5. Verfahren nach Anspruch 3 oder Anspruch 4, wobei das Lösungsmittel zwischen 5 und 50 % von einem oder mehreren Alkoholen und zwischen 95 und 50 % Wasser umfasst.

6. Verfahren nach einem der vorhergehenden Ansprüche, wobei die Mischung aus Schritt (a) ferner zwischen 10⁻⁶ und 10⁻³ M von mindestens einem Stoff umfasst, der unter Folgendem ausgewählt wird: Polymethylmethacrylat (pMMA), Polyvinylpyrrolidon, Polyacrylsäure und Polyacrylamid.

7. Verfahren nach einem der vorhergehenden Ansprüche, wobei die Verbindungen der Mischung vor der Bestrahlung unter einem Sauerstoffvakuum untergebracht werden.

8. Verfahren nach einem der vorhergehenden Ansprüche, wobei die Mischung aus Schritt (a) durch eine Strahlung mit einer Wellenlänge behandelt wird, die zwischen 4.10⁻⁷ und 10⁻¹² Meter enthalten ist.

9. Verfahren nach einem der vorhergehenden Ansprüche, wobei die Dosisleistung der Behandlung durch Strahlung größer oder gleich 2 kGray/Stunde ist.

10. Verfahren nach einem der vorhergehenden Ansprüche, wobei die Bestrahlungsdosis zwischen 1 und 30 kGray enthalten ist.

11. Verfahren nach einem der vorhergehenden Ansprüche, wobei die Mischung von Schritt (a) vor der Bestrahlung in eine Gussform eingeführt wird.

12. Verbundwerkstoff, der durch das Verfahren nach einem der Ansprüche 1 bis 11 erhalten werden kann, der Folgendes umfasst:
(i) eine poröse Polymermatrix auf Basis von Monomeren, von der mindestens 50 Gew.-% HEMA sind,
(ii) Silbernanopartikel, die eine monodisperse Größenverteilung aufweisen, die in der Polymermatrix verteilt sind.

13. Werkstoff nach Anspruch 12, wobei die Silbermenge zwischen 10⁻² und 10⁻⁵ Ma% im Verhältnis zur Gesamtmasse des Werkstoffs ist.

14. Verwendung eines Werkstoffs nach einem der Ansprüche 12 oder 13 als antimikrobieller Werkstoff.

15. Verwendung eines Werkstoffs nach einem der Ansprüche 12 oder 13 zur Herstellung von Prothesen oder als Zement für die Einrichtung von Prothesen, zur Herstellung chirurgischer Instrumente, zur Herstellung von Linsen, zur Herstellung von Verbänden, zur Herstellung von Folgendem: für die Bauwirtschaft bestimmte Ausrüstungen, antibakterielle Flächen, elektrische Schalter, Innenwände von Kühlschränken, Trinkwasserspeicher, Flaschen, Platten, die zur Aufnahme chirurgischer Instrumente bestimmt sind, Wickeltische, Badezimmer- oder Küchenmöbel, Möbel, die für die Ausrüstung von Körperschaften bestimmt sind, Kleidung, Sporteinrichtungen, Schuhsohlen, sanitäre Einrichtungen.

16. Verwendung eines Werkstoffs nach einem der Ansprüche 12 oder 13 als Konservierungsstoff in kosmetischen Verbindungen oder Anstrichmittelverbindungen.

## Claims

1. A method for producing a composite material comprising a porous polymer matrix wherein silver nanoparticles are dispersed, this method comprising the following steps:
(a) mixing two compositions:
(i) a first composition comprising a polymerizable fluid comprising HEMA or 2-hydroxy-ethylmethacrylate present in said fluid in monomer form, and
(ii) a second composition comprising silver salts;
said mixture further comprising solvents chosen from water and at least one alcohol;
(b) irradiating the mixture of step (a) with radiation having a wavelength capable of causing the polymerization of the polymerizable fluid and the formation of silver nanoparticles simultaneously.

2. The method according to claim 1, wherein the HEMA represents more than 50% by mass of the total mass of the monomers and prepolymers of the polymerizable fluid composition.

3. The method according to any one of the preceding claims, wherein the composition comprising silver salts is an aqueous solution of silver salts.

4. The method according to any one of the preceding claims, wherein the mixture of step (a) comprises:
- 55% to 70% by volume of monomer or of prepolymer,
- 30% to 45% by volume of solvents,
- 10⁻¹ to 10⁻⁵ percent by mass of silver salts.

5. The method according to claim 3 or claim 4, wherein the solvent comprises from 5% to 50% of one or more alcohols and from 95% to 50% of water.

6. The method according to any one of the preceding claims, wherein the mixture of step (a) further comprises between 10⁻⁶ and 10⁻³ M of at least one substance chosen from: poly(methyl methacrylate) (pMMA), polyvinyl-pyrrolidone, poly(acrylic acid) and polyacrylamide.

7. The method according to any one of the preceding claims, wherein the constituents of the mixture are placed under an oxygen vacuum before irradiation.

8. The method according to any one of the preceding claims, wherein the mixture of step (a) is treated with radiation having a wavelength of between 4.10⁻⁷ and 10⁻¹² meter.

9. The method according to any one of the preceding claims, wherein the dose flow rate of the radiation treatment is greater than or equal to 2 kGray/hour.

10. The method according to any one of the preceding claims, wherein the irradiation dose is between 1 and 30 kGray.

11. The method according to any one of the preceding claims, wherein the mixture of step (a) is introduced into a mold before irradiation.

12. A composite material which can be obtained by means of the method according to any one of claims 1 to 11, which comprises:
(i) a monomer-based porous polymer matrix wherein at least 50% by weight of said monomer is HEMA,
(ii) silver nanoparticles having a monodisperse size distribution, distributed in the polymer matrix.

13. The material according to claim 12, wherein the amount of silver is between 10⁻² and 10⁻⁵ % by mass relative to the total mass of the material.

14. The use of a material according to any one of claims 12 or 13, as an antimicrobial material.

15. The use of a material according to any one of claims 12 or 13, for the manufacture of prostheses, or as a cement for implanting prostheses, for manufacturing surgical instruments, for producing lenses, in the manufacture of dressings, for producing: equipment intended for construction, antibacterial surfaces, electrical switches, internal walls of refrigerators, drinking water reservoirs, jars, trays intended to hold surgical instruments, changing tables, bathroom or kitchen furniture, furniture intended to equip community environments, clothing, sporting equipment, insoles for shoes, and sanitary installations.

16. The use of a material according to any one of claims 12 or 13, as a preservative in cosmetic compositions or paint compositions.
